# EUROPEAN PATENT SPECIFICATION

(11) **EP 3 029 908 B1**
(45) Date of publication and mention of the grant of the patent: **12.06.2019**
(21) Application number: 14841487.3
(22) Date of filing: 05.08.2014
(51) Int. Cl.: H04L 29/06

(54) **SERVICE AUTHORITY DETERMINATION METHOD AND DEVICE**
VERFAHREN UND VORRICHTUNG ZUR DIENSTAUTORISIERUNGSBESTIMMUNG
PROCÉDÉ ET DISPOSITIF DE DÉTERMINATION DE DROIT DE MAINTENANCE

(30) Priority: 04.09.2013 CN 201310399717
(43) Date of publication of application: 08.06.2016
(73) Proprietor: Huawei Technologies Co., Ltd., Longgang District Shenzhen, Guangdong 518129 (CN)
(72) Inventor: JIAN, Haiyan, Shenzhen Guangdong 518129 (CN); LI, Jing, Shenzhen Guangdong 518129 (CN); YE, Wanling, Shenzhen Guangdong 518129 (CN)
(74) Representative: Epping - Hermann - Fischer
(86) International application number: PCT/CN2014/083732
(87) International publication number: WO 2015/032253

(56) References cited:
- EP-A1- 1 583 312
- WO-A1-2009/113931
- WO-A1-2013/144504
- WO-A2-2013/072193
- CN-A- 101 098 319
- CN-A- 101 175 018
- CN-A- 101 453 426
- CN-A- 101 453 426
- US-A1- 2004 221 037

## Description

### FIELD

Embodiments of the invention relate to the field of communication technology, and in particular to a method and an apparatus for determining a service authority.

### BACKGROUND

With a web real-time communication (abbreviated as WebRTC below) service in the third generation partnership project (3rd Generation Partnership Project), an internet protocol multimedia subsystem (abbreviated as IMS below) user can access an IMS network via a third-party web (Web) application for communication, thereby realizing communication between Web and an IMS user equipment. In consideration of security and operation, an operator needs to control a service authority of an IMS user for accessing an IMS network based on a trust relation between the operator and a third-party Web application website.

Conventionally, an IMS user communicates with an IMS network directly and the IMS user is required to perform service subscription with an operator of the IMS network during the communication. The IMS user initiates a registration process to the IMS network before accessing the IMS network, so that an application server (abbreviated as AS below) obtains user subscription data via an HSS. After the above registration process is completed, the IMS user sends a session request for the IMS network to the IMS network. The IMS network determines whether the IMS user has subscribed with the IMS network based on the user subscription data in the AS, and accordingly determines whether to accept the session request from the IMS user.

However, currently, the IMS network controls the service authority only based on the IMS user subscription data, and cannot accurately control the authority of the IMS user for the service in which the IMS user accesses the IMS network via a third-party Web application.

Document EP 1 583 312 A1 discloses a method for controlling access to an IMS from an application server, in which a database access control node is operable to control access to the subscriber database from the application server and a session message control node is operable to control communication of the message to the session protocol server from the application server.

Document CN 101 453 426 A discloses a method for presenting object status information to a user. In the method, a presence information source, such as an UE, uploads status information of the presence information source to an object status information presence system by using a SIP core network, and a subscriber UE can obtain the status information of the presence information source.

### SUMMARY

A method and an apparatus for determining a service authority are provided according to embodiments of the present invention, to solve the technical problem that conventionally fine control cannot be performed on the service authority of an IMS user in a case that the IMS user accesses an IMS network via a third-party Web application.

In a first aspect, a method for determining a service accessibility of a user equipment (UE) in a case that the UE accesses an IP Multimedia Subsystem (IMS) network via a third-party web (Web) application is provided according to an embodiment of the present invention, including:
receiving a Web application identifier of the third-party web application sent by an access device; and
sending the Web application identifier to an application server (AS), to cause the AS to determine the service accessibility of the UE based on a service accessibility policy corresponding to the Web application identifier and service subscription data of the UE.

In conjunction with the first aspect, in a first possible implementation of the first aspect, receiving the Web application identifier sent by the access device includes:
receiving a session initiation protocol (SIP) registration message sent by the access device, where the SIP registration message carries the Web application identifier.

In conjunction with the first aspect, in a second possible implementation of the first aspect, receiving the Web application identifier sent by the access device includes:
receiving an invite message sent by the access device, where the invite message carries the Web application identifier.

In conjunction with the first possible implementation of the first aspect, in a third possible implementation of the first aspect, receiving the SIP registration message sent by the access device includes:
receiving the SIP registration message, which is sent by the access device after the Web application identifier sent by an operator web real-time communication (WebRTC) authentication system is received by the access device, where the Web application identifier is sent by the operator WebRTC authentication system after the operator WebRTC authentication system verifies that an access code received from the access device is valid.

In conjunction with the second possible implementation of the first aspect, in a fourth possible implementation of the first aspect, receiving the invite message sent by the access device includes:
receiving the invite message, which is sent by the access device after the Web application identifier sent by an operator WebRTC authentication system is received by the access device, where the Web application identifier is sent by the operator WebRTC authentication system after the operator WebRTC authentication system verifies that an access code received from the access device is valid.

In conjunction with the second possible implementation of the first aspect, in a fifth possible implementation of the first aspect, the invite message, which is sent by the access device after a session request message carrying the Web application identifier sent by the UE is received by the access device, is received.

In conjunction with any one of the first aspect to the fifth possible implementation of the first aspect, in a sixth possible implementation of the first aspect, the service accessibility policy corresponding to the Web application identifier is pre-configured in the AS, or is obtained by the AS from a home subscriber server HSS.

In a second aspect, a method for determining a server accessibility of a user equipment (UE) in a case that the UE accesses an IP Multimedia Subsystem (IMS) network via a third-party web (Web) application is provided according to an embodiment of the present invention, including:
receiving, by an application server (AS), a Web application identifier of the third-party web application sent by a network device; and
determining the service accessibility of the UE based on a service accessibility policy corresponding to the Web application identifier and service subscription data of the UE.

In conjunction with the second aspect, in a second possible implementation of the second aspect, the service accessibility policy corresponding to the Web application identifier is pre-configured in the AS, or is obtained by the AS from a home subscriber server (HSS).

In a third aspect, an apparatus for determining a service accessibility of a user equipment (UE) in a case that the UE accesses an IP Multimedia Subsystem (IMS) network via a third-party web (Web) application is provided according to an embodiment of the present invention, including:
a receiving module configured to receive a Web application identifier of the third-party web application sent by an access device; and
a sending module configured to send the Web application identifier to an application server (AS), to cause the AS to determine the service accessibility of the UE based on a service accessibility policy corresponding to the Web application identifier and service subscription data of the UE.

In conjunction with the third aspect, in a first possible implementation of the third aspect, the receiving module includes:
a first receiving unit configured to receive a session initiation protocol (SIP) registration message sent by the access device, where the SIP registration message carries the Web application identifier.

In conjunction with the third aspect, in a second possible implementation of the third aspect, the receiving module includes:
a second receiving unit configured to receive an invite message sent by the access device, where the invite message carries the Web application identifier.

In conjunction with the first possible implementation of the third aspect, in a third possible embodiment of the third aspect, the first receiving unit is configured to receive the SIP registration message, which is sent by the access device after the Web application identifier sent by an operator web real-time communication (WebRTC) authentication system is received by the access device, where the Web application identifier is sent by the operator WebRTC authentication system after the operator WebRTC authentication system verifies that an access code received from the access device is valid.

In conjunction with the second possible implementation of the third aspect, in a fourth possible implementation of the third aspect, the second receiving unit is configured to receive the invite message, which is sent by the access device after the Web application identifier sent by an operator WebRTC authentication system is received by the access device, where the Web application identifier is sent by the operator WebRTC authentication system after the operator WebRTC authentication system verifies that an access code received from the access device is valid.

In conjunction with the second possible implementation of the third aspect, in a fifth possible implementation of the third aspect, the second receiving unit is configured to receive the invite message, which is sent by the access device after a session request message carrying the Web application identifier sent by the UE is received by the access device.

In conjunction with any one of the third aspect to the fifth possible implementation of the third aspect, in a sixth possible implementation of the third aspect, the service accessibility policy corresponding to the Web application identifier is pre-configured in the AS, or is obtained by the AS from a home subscriber server (HSS).

In a fourth aspect, an apparatus for determining a service accessibility of a user equipment (UE) in a case that the UE accesses an IP Multimedia Subsystem (IMS) network via a third-party web (Web) application is provided according to an embodiment of the present invention, including:
a receiving module configured to receive a Web application identifier of the third-party web application sent by a network device; and
a determining module configured to determine the service accessibility of the UE based on a service accessibility policy corresponding to the Web application identifier and service subscription data of the UE.

In conjunction with the fourth aspect, in a first possible implementation of the fourth aspect, the service accessibility policy corresponding to the Web application identifier is pre-configured in the AS, or is obtained by the AS from a home subscriber server (HSS).

In the method for determining a service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the authority of the UE in a scenario in which the UE accesses an IMS network from a Web application website.

### BRIEF DESCRIPTION OF THE DRAWINGS

In order to more clearly illustrate the technical solution in the embodiments of the present invention or in the conventional technology, drawings required in the description of the embodiments or the conventional technology will be introduced simply below. Obviously, the drawings in the following description are some embodiments of the invention. Other drawings may be obtained by those skilled in the art according to these drawings without any creative work.
Figure 1 is a schematic flowchart of a first embodiment of a method for determining a service authority according to the present invention;
Figure 2 is a schematic flowchart of a second embodiment of a method for determining a service authority according to the present invention;
Figure 3 is a signaling flowchart of a third embodiment of a method for determining a service authority according to the present invention;
Figure 4 is a signaling flowchart of a fourth embodiment of a method for determining a service authority according to the present invention;
Figure 5 is a signaling flowchart of a fifth embodiment of a method for determining a service authority according to the present invention;
Figure 6 is a schematic structural diagram of a first embodiment of an apparatus for determining a service authority according to the present invention;
Figure 7 is a schematic structural diagram of a second embodiment of an apparatus for determining a service authority according to the present invention;
Figure 8 is a schematic structural diagram of a third embodiment of an apparatus for determining a service authority according to the present invention;
Figure 9 is a schematic structural diagram of a fourth embodiment of an apparatus for determining a service authority according to the present invention;
Figure 10 is a schematic structural diagram of a first embodiment of a device for determining a service authority according to the present invention;
Figure 11 is a schematic structural diagram of a second embodiment of a device for determining a service authority according to the present invention; and
Figure 12 is a schematic structural diagram of a first embodiment of a system for determining a service authority according to the present invention.

### DETAILED DESCRIPTION OF THE EMBODIMENTS

To make the object, technical solutions and advantages of the embodiments of the present invention clearer, the technical solutions according to the embodiments of the present invention will be described clearly below in conjunction with the accompany drawings in the embodiments of the present invention. It is apparent that the described embodiments are only a few but not all of embodiments of the present invention as defined in the attached claims.

The user equipment mentioned in the present invention may be a wireless terminal or a wired terminal. The wireless terminal may be a device for providing voice and/or data connectivity to a user, a handheld device having a wireless connection function or other processing device connected to a wireless modem. The wireless terminal can communicate with one or more core networks via a radio access network (for example, RAN, Radio Access Network). The wireless terminal may be a mobile terminal such as a mobile phone (or called a "cellular" phone) and a computer having a mobile terminal, for example, the wireless terminal may be a portable mobile apparatus, a pocket-size mobile apparatus, a handheld mobile apparatus, a built-in mobile apparatus in a computer or a vehicle-mounted mobile apparatus, which exchange language and/or data with a radio access network. For example, a personal communication service (PCS) phone, a cordless telephone, a session initiation protocol (SIP) phone, a wireless local loop (WLL) station, a personal digital assistant (PDA). The wireless terminal may also be referred to as a system, a subscriber unit, a subscriber station, a mobile station (Mobile Station), a mobile, a remote station, an access point, a remote terminal, an access terminal, a user terminal, a user agent, a user device or a user equipment.

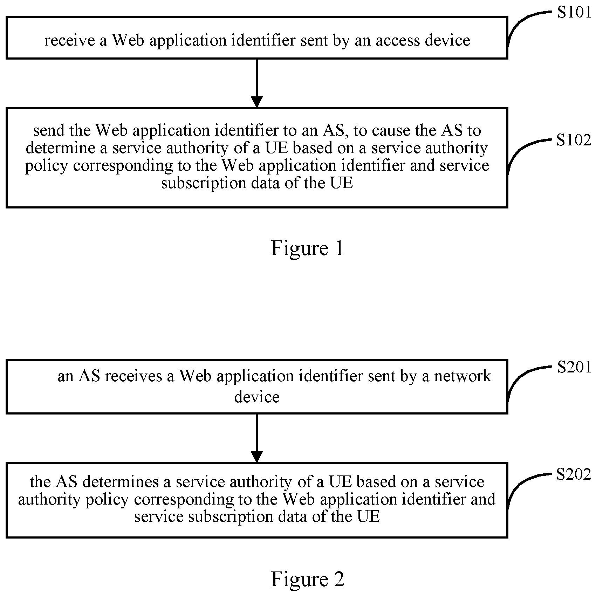

Figure 1 is a schematic flowchart of a first embodiment of a method for determining a service authority according to the present invention. The embodiment provides a method for determining a service authority of a UE in a case that the UE accesses an IMS network via a Web application website. The following steps are performed by a network device at the IMS network side. The network device may be an interrogating call session control (abbreviated as I-CSCF below) network element server, a service call session control (abbreviated as S-CSCF below) network element server, or a proxy call session control (abbreviated as P-CSCF below) network element server, which is not limited in the embodiment of the present invention. In the embodiment of the present invention, a case that the network device is the S-CSCF is taken as an example for illustration. As shown in Figure 1, the method according to the embodiment includes:
In S101, a Web application identifier sent by an access device is received.

According to the embodiment of the present invention, UEs may be distinguished by different identity identifiers. The identity identifier may be, for example, a card number of a subscriber identity module (abbreviated as SIM below), which is not limited therein.

A user logs onto a third-party Web application website via an UE. In a case that the user wants to initiate a WebRTC service when browsing the third-party Web application website, for example, the user wants to initiate a WebRTC service for contacting a seller when browsing Taobao website. In this case, the third-party application website is the Taobao website and the WebRTC service is the service for contacting the seller. Then the user sends a login request message to an operator WebRTC authentication system by the UE (the operator Web authentication system also includes a WebRTC portal site server, and the user actually logs onto a WebRTC portal site). The login request message carries a Web application identifier (that is, an identifier of the Taobao website in the above example). The operator WebRTC authentication system performs a series of processes on the login request message and sends the WebRTC application identifier to the access device, so that the access device sends the Web application identifier to a network device. Further, the access device may obtain a user identity identifier from the operator WebRTC authentication system and send the user identity identifier to the network device, so that the network device can obtain the identity of the UE based on the user identity identifier. The above access device may be a WebRTC gateway or other device having a function of accessing a network that accesses the IMS network. The Web application identifier sent to the network device by the access device may be carried in a registration message, or may be carried in an invite message, or may be carried in other message, which is not limited in the embodiment of the present invention.

In S102, the Web application identifier is sent to an AS, to cause the AS to determine a service authority of the UE based on a service authority policy corresponding to the Web application identifier and service subscription data of the UE.

Specifically, the network device sends the above Web application identifier to the AS. After receiving the Web application identifier, the AS determines whether to reject or accept the service authority of the UE when the UE accesses the IMS network based on the service authority policy corresponding to the above Web application identifier and the subscription service data of the UE stored in the AS itself.

The service authority policy corresponding to the above Web application identifier may include a mapping relationship between a Web application identifier and a service authority of the UE. The service authority policy corresponding to the Web application identifier is a service allowed for the user in a case that the user accesses the IMS network from a Web application website corresponding to the Web application identifier.

The AS determining the service authority of the UE based on the service authority policy corresponding to the Web application identifier and the subscription service data of the UE may include: upon receipt of the Web application identifier forwarded by the network device, the AS searches for the service authority of the user corresponding to the Web application identifier based on the Web application identifier and searches for the service authority of the user in the subscription service data of the UE in conjunction with the user identity identifier, and then obtains an intersection of the two service authorities to determine the service allowed for the user when the user accesses the IMS network.

A specific example is described below for illustration. Provided that user A wants to implement a video service, a voice service and a short message service in the IMS network, and the services stored in the AS that the user subscribed with the IMS network are the voice service and the short message service. In the conventional process, a session request for a video service initiated to the IMS network by the user A will be rejected by the IMS network, and a session request for a voice service or a short message service initiated to the IMS network by the user A will be accepted by the IMS network. However, services accepted by the IMS network are different in view that the user A accesses the IMS network via different Web application websites. For example, in a case that the user A accesses the IMS network via application website A and initiates a session request for a voice service to the IMS network, the session request is accepted by the IMS network; and in a case that the user A accesses the IMS network via website B and initiates a session request for a voice service to the IMS network, the session request is rejected by the IMS network, thus user communication cannot be ensured. According to the embodiment of the present invention, in addition to the service subscription data of the UE, different service authority policies corresponding to different Web application identifiers are also stored in the AS. For example, the service authority of the user A corresponding to the application website B is only the short message service, and in conjunction with the service authority of the user A defined in the subscriber data of the UE (services that the user A subscribed with the IMS network are a voice service and a short message service), comprehensive evaluation is performed on the two service authorities, then it is determined that the service authority of the user A in a case that the user A accesses the IMS network via the website B is only the short message service, so that the network device can control the WebRTC service authority of the UE more accurately.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the authority of the UE in a scenario in which the UE accesses an IMS network from a Web application website.

Furthermore, on the basis of the embodiment as shown in Figure 1, a specific way of obtaining the Web application identifier from the access device by the network device is provided according to the embodiment, as a possible implementation of the embodiment of the present invention. Specifically, in the above S101, a session initiation protocol (abbreviated as SIP below) registration message sent by the access device is received. The SIP registration message carries the above Web application identifier.

Specifically, as described in the embodiment as shown Figure 1, the UE sends a login request message to the WebRTC authentication system after the UE logs onto the third-party Web application website. The login request message carries a Web application identifier of the third-party Web application website. An operator Web authentication system receives the login request message, verifies whether the user identity is legal and determines a user identity identifier. After verifying that the user identity is legal, the operator Web authentication system sends a verification response message to the UE. The verification response message carries an access code. The access code is an access code for accessing the network device via the current third-party Web application website, which is allocated to the UE by the operator WebRTC authentication system based on the identity of the UE and the Web application identifier. The verification response message further carries an address of the access device. After receiving the above verification response message, the UE sends a registration request message to the corresponding access device based on the address of the access device in the verification response message. The registration request message carries the access code.

Thereafter, the operator WebRTC authentication system performs a series of processes based on the above access code, and sends the above Web application identifier to the access device. In this case, the access device may initiate a SIP registration process, i.e., send a SIP registration message, to the network device. The SIP registration message carries the Web application identifier. After receiving the SIP registration message sent by the access device, the network device sends a SIP success message to the access device, so that the access device informs the UE that the registration process is finished. Subsequently, the UE may initiate a session process to the access device.

In the above session process, the UE sends a WebRTC session request message to the access device, and the access device sends an invite message to the network device after receiving the WebRTC session request message. The network device then adds the Web application identifier obtained from the SIP registration message into the received invite message and forwards the invite message to the AS, so that the AS determines whether to reject or accept the session request initiated by the UE when the UE accesses the IMS network based on a service authority policy corresponding to the above Web application identifier and service subscription data of the UE stored in the AS itself. It should be noted that, the service authority policy corresponding to the Web application identifier stored in the AS may be pre-configured in the AS, or may be obtained by the AS from a home subscriber server (abbreviated as HSS below).

Furthermore, on the basis of the embodiment as shown in Figure 1, another way of obtaining the Web application identifier from the access device by the network device is provided according to the embodiment, as another possible implementation of the embodiment of the present invention. Specifically, in the above S101, an invite message sent by the access device is received. The invite message carries the Web application identifier.

Specifically, as described in the embodiment as shown Figure 1, the UE sends a login request message to the WebRTC authentication system after the UE logs onto the third-party Web application website. The login request message carries the Web application identifier of the third-party Web application website. An operator Web authentication system receives the login request message, verifies whether the user identity is legal and determines a user identity identifier. After verifying that the user identity is legal, the operator Web authentication system sends a verification response message to the UE. The verification response message carries an access code. The access code is an access code for accessing the network device via the current third-party Web application website, which is allocated to the UE by the operator WebRTC authentication system based on the user identity and the Web application identifier. The verification response message further carries an address of the access device. After receiving the above verification response message, the UE sends a registration request message to the corresponding access device based on the address of the access device in the verification response message. The registration request message carries the access code.

Thereafter, the operator WebRTC authentication system performs a series of processes based on the above access code, and sends the above Web application identifier to the access device. In this case, the access device may initiate a SIP registration process, i.e., send a SIP registration message, to the network device. The SIP registration message carries the user identity identifier (but does not carry the Web application identifier). After receiving the SIP registration message sent by the access device, the network device sends a SIP success message to the access device, so that the access device informs the UE that the registration process is finished. Subsequently, the UE may initiate a session process to the access device.

In the above session process, the UE sends a WebRTC session request message to the access device, and after receiving the WebRTC session request message, the access device adds the Web application identifier previously obtained from the operator WebRTC authentication system and the user identity identifier into an invite message and sends the invite message to the network device. The network device then forwards the invite message carrying the Web application identifier and the user identity identifier to the AS, so that the AS determines whether to reject or accept the session request initiated by the UE when the UE accesses the IMS network based on a service authority policy corresponding to the above Web application identifier and subscription service data of the UE stored in the AS itself. It should be noted that, the service authority policy corresponding to the Web application identifier stored in the AS may be pre-configured in the AS, or may be obtained by the AS from an HSS.

Furthermore, on the basis of the embodiment as shown in Figure 1, another way of obtaining the Web application identifier from the access device by the network device is provided according to the embodiment, as a third possible implementation of the embodiment of the present invention. Specifically, receiving the invite message sent by the access device mentioned above includes: receiving the invite message sent by the access device after the session request message carrying the Web application identifier sent by the UE is received by the access device.

Specifically, as described in the embodiment as shown Figure 1, the UE sends a login request message to the WebRTC authentication system after the UE logs onto the third-party Web application website. The login request message carries the Web application identifier of the third-party Web application website. An operator Web authentication system receives the login request message, verifies whether the user identity is legal and determines a user identity identifier. After verifying that the user identity is legal, the operator Web authentication system sends a verification response message to the UE. The verification response message carries an access code. The access code is an access code for accessing the network device via the current third-party Web application website, which is allocated to the UE by the operator WebRTC authentication system based on the user identity and the Web application identifier. The verification response message further carries an address of the access device. After receiving the above verification response message, the UE sends a registration request message to the corresponding access device based on the address of the access device in the verification response message. The registration request message carries the access code.

Thereafter, the operator WebRTC authentication system performs a series of processes based on the above access code, and sends the user identity identifier to the access device. In this case, the access device may initiate a SIP registration process, i.e., send a SIP registration message, to the network device. The SIP registration message carries the user identity identifier (but does not carry the Web application identifier). After receiving the SIP registration message sent by the access device, the network device sends a SIP success message to the access device, so that the access device informs the UE that the registration process is finished. Subsequently, the UE may initiate a session process to the access device.

In the above session process, the UE sends a WebRTC session request message to the access device. The WebRTC session request message carries the Web application identifier. After receiving the WebRTC session request message, the access device adds the Web application identifier obtained from the WebRTC session request message into an invite message and sends the invite message to the network device. Thereafter, the network device forwards the invite message carrying the Web application identifier to the AS, so that the AS determines whether to reject or accept a session request initiated by the UE when the UE accesses the IMS network based on a service authority policy corresponding to the above Web application identifier and subscription service data of the UE stored in the AS itself. It should be noted that, the service authority policy corresponding to the Web application identifier stored in the AS may be pre-configured in the AS, or may be obtained by the AS from an HSS.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the authority of the UE in a scenario in which the UE accesses an IMS network from a Web application website.

On the basis of the above embodiment, the embodiment of the present invention provides a specific process of receiving, by the network device, the SIP registration message or the invite message after the registration request message carrying the access code sent by the UE is obtained by the access device, and the process is as follows.

After receiving the registration request message carrying the access code sent by the UE, the access device sends the access code to the operator WebRTC authentication system, so that the WebRTC authentication system verifies the access code and identifies whether the access code is valid, that is, the WebRTC authentication system determines whether the access code carried in the registration request message of the UE is the access code previously allocated to the UE by the operator WebRTC authentication system. In a case that the access code carried in the registration request message of the UE is the access code previously allocated to the UE by the operator WebRTC authentication system, the operator WebRTC authentication system sends the user identity identifier and the Web application identifier to the access device. The user identity identifier may be an IP multimedia public identity (abbreviated as IMPU below) and IP multimedia private identity (abbreviated as IMPI below). Then the access device sends the SIP registration message carrying the Web application identifier or the invite message carrying the Web application identifier to the network device.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the authority of the UE in a scenario in which the UE accesses an IMS network from a Web application website.

Figure 2 is a schematic flowchart of a second embodiment of a method for determining a service authority according to the present invention. The embodiment provides a method for determining, by an AS, a service authority of a UE in a case that the UE accesses an IMS network via a Web application website. As shown in Figure 2, the method includes S201 to S202.

In S201, the AS receives a Web application identifier sent by the network device.

The network device may be an I-CSCF network element server, an S-CSCF network element server, or a P-CSCF network element server, which is not limited in the embodiment of the present invention. The Web application identifier sent to the AS by the network device may be carried in an invite message or other message.

In S202, the AS determines the service authority of the UE based on a service authority policy corresponding to the above Web application identifier and service subscription data of the UE.

Specifically, the service authority policy corresponding to the above Web application identifier may include a mapping relationship between the Web application identifier and the service authority, i.e., a service allowed for the user in a case that the user accesses the IMS network from a Web application website corresponding to the Web application identifier. The AS determining the service authority of the UE based on the service authority policy corresponding to the Web application identifier and the service subscription data of the UE may include: in a case that the AS receives the Web application identifier sent by the network device, the AS searches for the service authority of the user corresponding to the Web application identifier based on the Web application identifier and searches for the service authority of the user in the subscription service data of the UE in conjunction with the user identity identifier, and then obtains an intersection of the two service authorities to determine the service allowed for the user when the user accesses the IMS network.

The service authority policy corresponding to the Web application identifier stored in the AS may be pre-configured in the AS, or may be obtained by the AS from an HSS. Furthermore, the service authority policy obtained by the AS from the HSS may be obtained from the HSS when the UE initiates a registration process to the access device.

Optionally, before the network device sends the Web application identifier to the AS, a registration process as follows may be included.

The user logs onto a third-party Web application website via the UE. In a case that the user wants to initiate a WebRTC service when browsing the third-party Web application website, for example, the user wants to initiate a WebRTC service for contacting a seller when browsing Taobao website. In this case, the third-party application website is the Taobao website and the WebRTC service is the service for contacting the seller. Then the user sends a login request message to a WebRTC authentication system by the UE (the operator Web authentication system also includes a WebRTC portal site server, and the user actually logs onto a WebRTC portal site). The login request message carries a Web application identifier (that is, an identifier of the Taobao website in the above example).

The operator Web authentication system receives the login request message, verifies the user identity and determines a user identity identifier. After the verification is passed, the operator Web authentication system sends a verification response message to the UE. The verification response message carries an access code. The access code is an access code for accessing the IMS network via the current Web application website, which is allocated to the UE by the operator WebRTC authentication system based on the user identity and the Web application identifier. The verification response message further carries an address of the access device.

Thereafter, the access device sends the above access code to the operator WebRTC authentication system, so that the WebRTC authentication system verifies the access code and identifies whether the access code is valid, that is, the WebRTC authentication system determines whether the access code carried in the registration request message of the UE is the access code previously allocated to the UE by the operator WebRTC authentication system. In a case that the access code carried in the registration request message of the UE is the access code previously allocated to the UE by the operator WebRTC authentication system, the operator WebRTC authentication system sends the user identity identifier to the access device. The user identity identifier may be an IMPU and an IMPI. The access device sends a SIP registration message to the network device after recording the user identity identifier, so that the network device sends a SIP success message to the access device, and then the registration process is completed.

In the method according to the embodiment of the present invention, the AS receives the Web application identifier sent by the network device and determines the service authority of the UE based on the stored service authority policy corresponding to the Web application identifier and service subscription data of the UE, thereby improving the accuracy of controlling, by the AS, the service authority of the UE in a scenario in which the UE accesses an IMS network scenario from a Web application website.

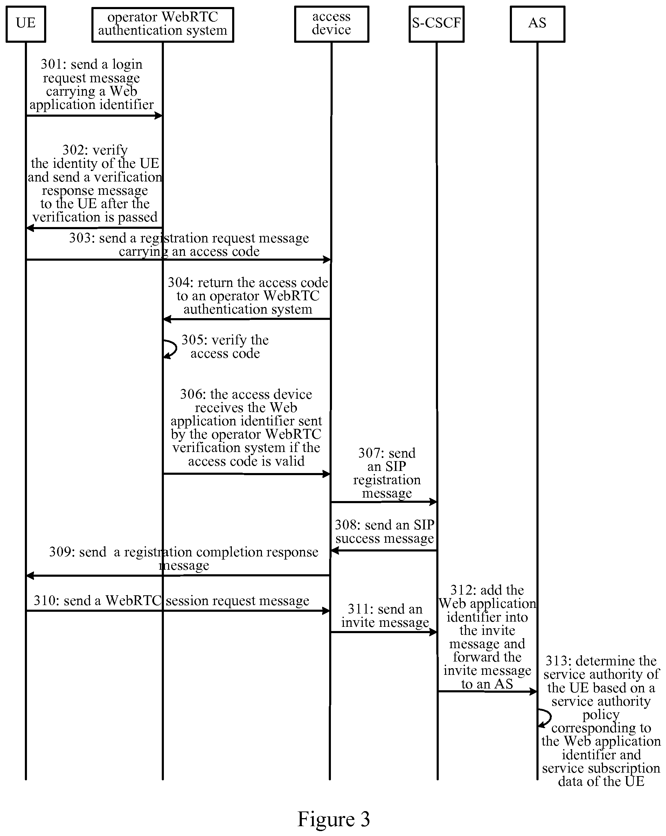

Figure 3 is a signaling flowchart of a third embodiment of a method for determining a service authority according to the present invention. The embodiment provides a process in which a Web application identifier is carried in a SIP registration message sent to a network device by an access device, so that an AS determines a service authority of a UE based on the Web application identifier. In the embodiment of the present invention, a case that the network device is the S-CSCF is taken as an example. As shown in Figure 3, the method includes S301 to S313.

In step S301, the UE sends a login request message carrying the Web application identifier to the operator WebRTC authentication system.

Specifically, according to the embodiment of the present invention, UEs may be distinguished by different identity identifiers, and the identity identifier may be, for example, a card number of an SIM card.

A user logs onto a third-party Web application website via the UE. In a case that the user wants to initiate a WebRTC service when browsing the third-party Web application website, for example, the user wants to initiate a WebRTC service for contacting a seller when browsing Taobao website. In this case, the third-party application website is the Taobao website and the WebRTC service is the service for contacting the seller. Then the user sends a login request message to a WebRTC authentication system (the operator Web authentication system also includes a WebRTC portal site, and the user actually logs onto a WebRTC portal site). The login request message carries a Web application identifier (that is, an identifier of the Taobao website in the above example).

In S302, the operator Web authentication system verifies the identity of the UE and sends a verification response message to the UE after the verification is passed.

Specifically, the above verification response message carries an access code for accessing an IMS network and an address of an access device, where the access code is allocated to the UE by the operator Web authentication system based on the identity of the UE and the Web application identifier. The operator WebRTC authentication system verifies the identity of the UE, that is, the operator WebRTC authentication system determines whether the identity of the UE is legal. After determining that the identity of the UE is legal, the operator WebRTC authentication system allocates an access code for accessing the IMS network to the UE, adds the access code and the address of the access device into the verification response message and sends the verification response message to the UE, so that the UE determines the corresponding access device based on the address of the access device.

In S303, the UE sends a registration request message carrying the access code to the access device.

In S304, the access device returns the access code to the operator WebRTC authentication system.

In S305, the operator WebRTC authentication system verifies the access code.

In S306, the access device receives the Web application identifier sent by the operator WebRTC authentication system in a case that the above access code is valid.

Optionally, the WebRTC authentication system may also send the user identity identifier to the access device.

Specifically, the WebRTC authentication system verifies the access code and identifies whether the access code is valid, that is, the WebRTC authentication system determines whether the access code carried in the registration request message of the UE is the access code previously allocated to the UE by the operator WebRTC authentication system. In a case that the access code carried in the registration request message of the UE is the access code previously allocated to the UE by the operator WebRTC authentication system, it is determined that the access code is valid and the operator WebRTC authentication system then sends the Web application identifier to the access device, so that the access device records the Web application identifier. Optionally, in a case that the access device also receives the user identifier from the WebRTC authentication system, the access device may also record the user identity identifier. The user identity identifier may be an IMPU and an IMPI.

In S307, the access device sends a SIP registration message to the S-CSCF.

The SIP registration message carries the Web application identifier, and may also carry the user identity identifier. After receiving the SIP registration message, the S-CSCF records the Web application identifier. Optionally, the S-CSCF records the user identity identifier and the Web application identifier in a case that the SIP registration message received by the S-CSCF carries the user identity identifier and the Web application identifier.

In S308, the S-CSCF sends a SIP success message to the access device.

In S309, the access device sends a registration completion response message to the UE.

In S310, the UE sends a WebRTC session request message to the access device.

In S311, the access device sends an invite message to the S-CSCF.

In S312, the S-CSCF adds the Web application identifier into the above invite message and forwards the invite message to the AS.

Specifically, the S-CSCF has recorded the Web application identifier previously, and the S-CSCF adds the Web application identifier into the above invite message and forwards the invite message to the AS.

In S313, the AS determines the service authority of the UE based on a service authority policy corresponding to the Web application identifier and service subscription data of the UE.

Optionally, the service authority policy corresponding to the Web application identifier is pre-configured in the AS, or is obtained by the AS from an HSS.

The service authority policy corresponding to the above Web application identifier may include a mapping relationship between the Web application identifier and the service authority, that is, the service allowed for the user in a case that the user accesses the IMS network from a Web application website corresponding to the Web application identifier. The AS determining the service authority of the UE based on the service authority policy corresponding to the Web application identifier and the service subscription data of the UE may include: upon receipt of the Web application identifier send by the network device, the AS searches for the service authority of the user corresponding to the Web application identifier based on the Web application identifier and searches for the service authority of the user in the subscription service data of the UE, and then obtains an intersection of the two service authorities to determine the service allowed for the user when the user accesses the IMS network.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the service authority of the UE in a scenario in which the UE accesses an IMS network from a Web application website.

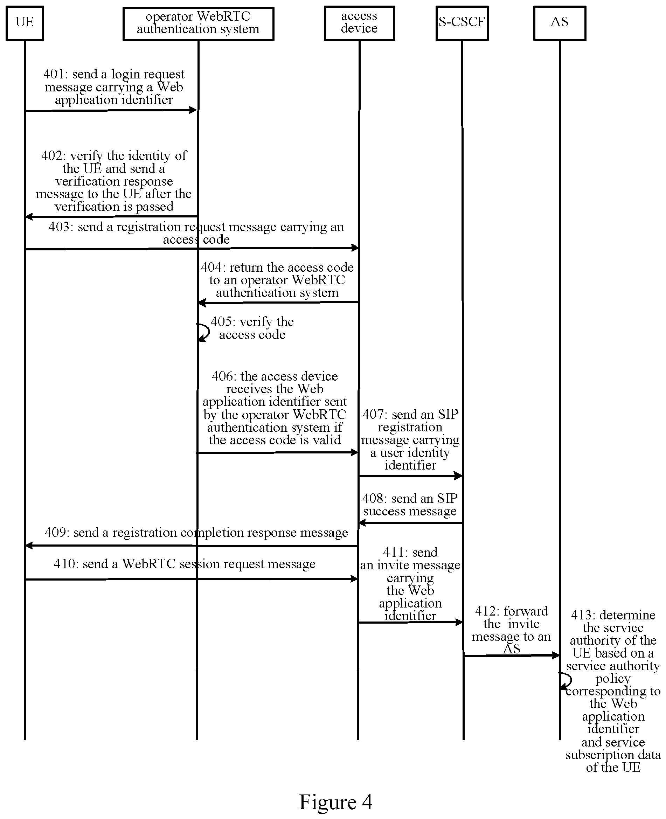

Figure 4 is a signaling flowchart of a fourth embodiment of a method for determining a service authority according to the present invention. The embodiment provides a process in which the Web application identifier is not carried in the SIP registration message sent to the network device by the access device but is carried in the invite message sent to the network device by the access device, to cause the AS to obtain the Web application identifier from the network device and determine the service authority of the UE based on the Web application identifier. A case that the network device is the S-CSCF is also taken as an example. As shown in Figure 4, the method includes S401 to S413.

In S401, a UE sends a login request message carrying a Web application identifier to an operator Web authentication system.

A user logs onto a third-party Web application website via the UE. In a case that the user wants to initiate a WebRTC service when browsing the third-party Web application website, for example, the user wants to initiate a WebRTC service for contacting a seller when browsing Taobao website. In this case, the third-party application website is the Taobao website and the WebRTC service is the service for contacting the seller. Then the user sends a login request message to a WebRTC authentication system (the operator Web authentication system also includes a WebRTC portal site, the user actually logs onto a WebRTC portal site). The login request message carries a Web application identifier (that is, an identifier of the Taobao website in the above example).

In S402, the operator Web authentication system verifies identity of the UE and sends a verification response message to the UE after the verification is passed.

Specifically, the above verification response message carries an access code for accessing an IMS network and an address of the access device, where the access code is allocated to the UE by the operator WebRTC authentication system based on the identity of the UE and the Web application identifier.

The operator WebRTC authentication system verifies the identity of the UE, that is, the operator WebRTC authentication system determines whether the identity of the UE is legal. After determining that the identity of the UE is legal, the operator WebRTC authentication system allocates an access code for accessing the IMS network to the UE, and adds the access code and the address of the access device into the verification response message and sends the verification response message to the UE, so that the UE determines the corresponding access device based on the address of the access device.

In S403, the UE sends a registration request message carrying the access code to the access device.

In S404, the access device returns the access code to the operator WebRTC authentication system.

In S405, the operator WebRTC authentication system verifies the access code.

In S406, the access device receives the Web application identifier sent by the operator WebRTC authentication system in a case that the above access code is valid.

Optionally, the operator WebRTC authentication system may also send the user identity identifier to the access device.

Specifically, the WebRTC authentication system verifies the access code and identifies whether the access code is valid, that is, the WebRTC authentication system determines whether the access code carried in the registration request message of the UE is the access code previously allocated to the UE by the operator WebRTC authentication system. In a case that the access code carried in the registration request message of the UE is the access code previously allocated to the UE by the operator WebRTC authentication system, it is determined that the access code is valid, and then the operator WebRTC authentication system sends the Web application identifier to the access device, so that the access device records the Web application identifier. Optionally, in a case that the user identifier is also received from-the WebRTC authentication system by the access device, the access device also records the user identity identifier. The user identity identifier may be an IMPU and an IMPI.

In S407, the access device sends a SIP registration message carrying the user identity identifier to the S-CSCF.

In S408, the S-CSCF sends a SIP success message to the access device.

In S409, the access device sends a registration completion response message to the UE.

In S410, the UE sends a WebRTC session request message to the access device.

In S411, the access device sends an invite message carrying the Web application identifier to the S-CSCF.

In S412, the S-CSCF forwards the above invite message to the AS.

Specifically, the S-CSCF has recorded the user identity identifier based on the SIP registration message previously. Hence, optionally, the S-CSCF may also add the user identity identifier into the above invite message and forward the invite message to the AS.

In S413, the AS determines the service authority of the UE based on a service authority policy corresponding to the Web application identifier and service subscription data of the UE.

Optionally, the service authority policy corresponding to the Web application identifier is pre-configured in the AS, or is obtained by the AS from an HSS.

The service authority policy corresponding to the Web application identifier described above may include a mapping relationship between a Web application identifier and a service authority, that is, the service allowed for the user in a case that the user accesses the IMS network from a Web application website corresponding to the Web application identifier. The AS determining the service authority of the UE based on the service authority policy corresponding to the Web application identifier and the service subscription data of the UE may include: in a case of receiving the Web application identifier send by the network device, the AS searches for the service authority of the user corresponding to the Web application identifier based on the Web application identifier and searches for the service authority of the user in the subscription service data of the UE, and then obtains an intersection of the two service authorities to determine the service allowed for the user in a case that the user accesses the IMS network.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the service authority of the UE in a scenario in which the UE accesses an IMS network from a Web application website.

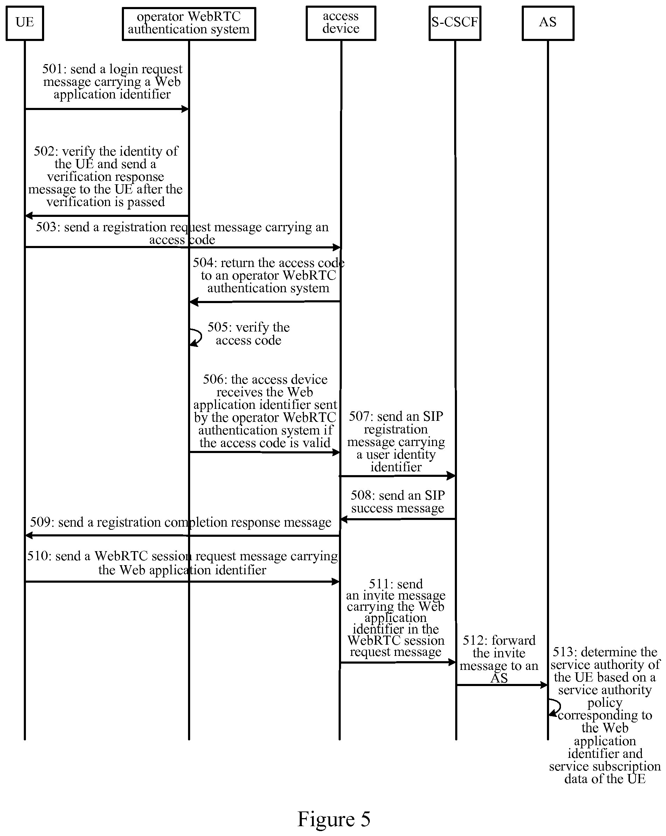

Figure 5 is a signaling flowchart of a fifth embodiment of a method for determining a service authority according to the present invention. The embodiment provides a process in which the Web application identifier is carried in the WebRTC session request message sent to the access device by the UE, so that the AS determines the service authority of the UE based on the Web application identifier. As shown in Figure 5, the method includes S501 to S513.

In S501, a UE sends a login request message carrying a Web application identifier to an operator Web authentication system.

A user logs onto a third-party Web application website via the UE. In a case that the user wants to initiate a WebRTC service when browsing the third-party Web application website, for example, the user wants to initiate a WebRTC service for contacting a seller when browsing Taobao website. In this case, the third-party application website is the Taobao website and the WebRTC service is the service for contacting the seller. Then the user sends a login request message to a WebRTC authentication system (the operator Web authentication system also includes a WebRTC portal site, and the user actually logs onto a WebRTC portal site). The login request message carries a Web application identifier (that is, an identifier of the Taobao website in the above example).

In S502, the operator Web authentication system verifies the identity of the UE and sends a verification response message to the UE after the verification is passed.

Specifically, the above verification response message carries an access code for accessing an IMS network and an address of the access device, the access code is allocated to the UE by the operator WebRTC authentication system based on the identity of the UE and the Web application identifier. The operator Web authentication system verifies the identity of the UE, that is, the operator WebRTC authentication system determines whether the identity of the UE is legal. After determining that the identity of the UE is legal, the operator Web authentication system allocates an access code for accessing the IMS network to the UE, and adds the access code and the address of the access device into the verification response message and sends the verification response message to the UE, so that the UE determines the corresponding access device based on the address of the access device.

In S503, the UE sends a registration request message carrying the access code to the access device.

In S504, the access device returns the access code to the operator WebRTC authentication system.

In S505, the operator WebRTC authentication system verifies the access code.

In S506, the access device receives a user identity identifier sent by the operator WebRTC authentication system in a case that the above access code is valid.

Specifically, the WebRTC authentication system verifies the access code and identifies whether the access code is valid, that is, the WebRTC authentication system determines whether the access code carried in the registration request of the UE is the access code previously allocated to the UE by the operator WebRTC authentication system. In a case that the access code carried in the registration request message of the UE is the access code previously allocated to the UE by the operator WebRTC authentication system, it is determined that the access code is valid, and then the operator WebRTC authentication system sends the user identity identifier to the access device, so that the access device records the user identity identifier. The user identity identifier may be an IMPU and an IMPI.

In S507, the access device sends a SIP registration message carrying the user identity identifier to the S-CSCF.

In S508, an I/S-CSCF sends a SIP success message to the access device.

In S509, the access device sends a registration completion response message to the UE.

Specifically, the access device sends the SIP registration request message to the I/S-CSCF. After receiving the registration request message, the I/S-CSCF records the identity of the UE and returns the SIP success message to the access device. The access device then sends the registration completion response message to the UE, and the entire registration process is completed.

In S510, the UE sends a WebRTC session request message carrying the Web application identifier to the access device.

In S511, the access device sends an invite message to the I/S-CSCF, and the invite message carries the Web application identifier in the above WebRTC session request message.

In S512, the S-CSCF forwards the above invite message to the AS.

The S-CSCF forwards the Web application identifier in the above WebRTC session request message to the AS. Optionally, the S-CSCF may also add the user identity identifier previously recorded and the Web application identifier into the invite message and forward the invite message to the AS.

In S513, the AS determines the service authority of the UE based on a service authority policy corresponding to the Web application identifier and service subscription data of the UE.

Optionally, the service authority policy corresponding to the Web application identifier is pre-configured in the AS, or is obtained by the AS from an HSS.

The service authority policy corresponding to the Web application identifier described above may include a mapping relationship between a Web application identifier and a service authority, that is, the service allowed for the user in a case that the user accesses the IMS network from a Web application website corresponding to the Web application identifier. The AS determining the service authority of the UE based on the service authority policy corresponding to the Web application identifier and the service subscription data of the UE may include: in a case of receiving the Web application identifier send by the network device, the AS searches for the service authority of the user corresponding to the Web application identifier based on the Web application identifier, and searches for the service authority of the user in the subscription service data of the UE, and then obtains an intersection of the two service authorities to determine the service allowed for the user when the user accesses the IMS network.

In the method for determining the service authority according to the embodiment of the present invention, the access device sends the Web application identifier to the network device of the IMS network, and the network device forwards the Web application identifier to the AS, to cause the AS to determine the service authority of the UE based on the service authority policy corresponding to the Web application identifier and the subscription service data of the UE, thereby improving the accuracy of controlling, by the network device, the service authority of the UE in a scenario in which the UE accesses an IMS network from a Web application website.

Those skilled in the art can understand that all of or a few of steps for implementing the above method embodiments may be performed by hardware related to program instructions. The program described above may be stored in a computer readable storage medium. When being executed, the program performs the steps of the above method embodiments. The storage medium described above includes various mediums capable of storing program codes, such as a ROM, an RAM, a magnetic disc and an optical disc.

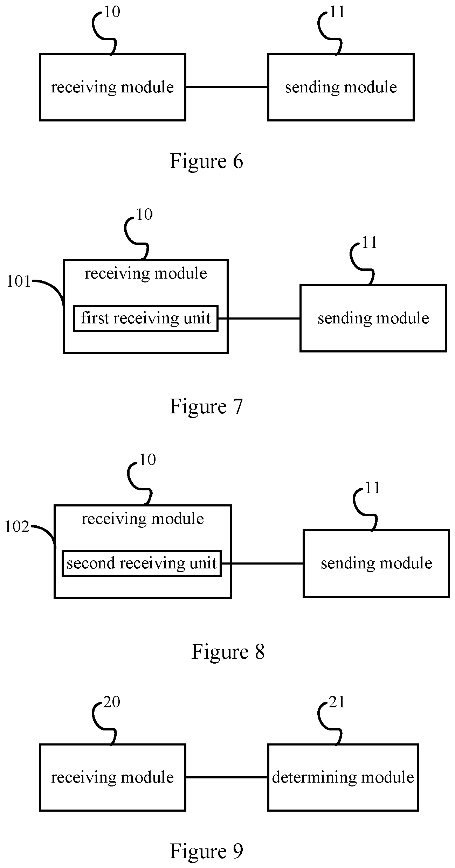

Figure 6 is a schematic structural diagram of a first embodiment of an apparatus for determining a service authority according to the present invention. As shown in Figure 6, the apparatus includes: a receiving module 10 configured to receive a Web application identifier sent by an access device; and a sending module 11 configured to send the Web application identifier to an AS, to cause the AS to determine a service authority of a user equipment UE based on a service authority policy corresponding to the Web application identifier and service subscription data of the UE.

In the apparatus for determining the service authority according to the embodiment of the present invention, the receiving module receives the Web application identifier sent by the access device, and the sending module sends the Web application identifier to the AS, to cause the AS to determine the service authority of the UE based on the service authority policy corresponding to the Web application identifier and the subscription service data of the UE, thereby improving the accuracy of controlling the service authority of the UE in a scenario in which the UE accesses an IMS network from a Web application website.

Figure 7 is a schematic structural diagram of a second embodiment of an apparatus for determining a service authority according to the present invention. On the basis of the embodiment as shown in Figure 6, furthermore, the above receiving module 10 includes a first receiving unit 101 configured to receive a SIP registration message sent by the access device, where the SIP registration message carries the Web application identifier.

In the apparatus for determining the service authority according to the embodiment of the present invention, the first receiving unit receives the SIP registration message carrying the Web application identifier, and the sending module sends the Web application identifier to the AS, to cause the AS to determine the service authority of the UE based on the service authority policy corresponding to the Web application identifier and the subscription service data of the UE, thereby improving the accuracy of controlling, by the network device, the service authority of the UE in a scenario in which the UE accesses an IMS network from a Web application website.

Figure 8 is a schematic structural diagram of a third embodiment of an apparatus for determining a service authority according to the present invention. On the basis of the embodiment as shown in Figure 6, furthermore, the above receiving module 10 includes a second receiving unit 102 configured to receive an invite message sent by the access device, where the invite message carries the Web application identifier.

In the apparatus for determining the service authority according to the embodiments of the present invention, the second receiving unit receives the invite message carrying the Web application identifier, and the sending module sends the Web application identifier to the AS, to cause the AS to determine the service authority of the UE based on the service authority policy corresponding to the Web application identifier and the subscription service data of the UE, thereby improving the accuracy of controlling the service authority of the UE in a scenario in which the UE accesses an IMS network from a Web application website.

Optionally, the above first receiving unit 101 is configured to receive the SIP registration message, which is sent by the access device after the Web application identifier sent by an operator WebRTC authentication system is received by the access device, where the Web application identifier is sent by the operator WebRTC authentication system after the operator WebRTC authentication system verifies that the access code received from the access device is valid; or the above second receiving unit 102 is configured to receive the invite message, which sent by the access device after the Web application identifier sent by the operator WebRTC authentication system is received by the access device, where the Web application identifier is sent by the above operator WebRTC authentication system after the above operator WebRTC authentication system verifies that the access code received from the access device is valid.

Optionally, the above second receiving unit 102 is configured to receive the invite message, which is sent by the above access device after a session request message carrying the Web application identifier sent by the UE is received by the above access device.

Optionally, the service authority policy corresponding to the above Web application identifier is pre-configured in the AS, or is obtained by the AS from an HSS.

Optionally, the above operator WebRTC authentication system may also send a user identity identifier to the access device when sending the Web application identifier to the access device.

In the apparatus for determining the service authority according to the embodiment of the present invention, the receiving module receives the Web application identifier sent by the access device, and the sending module sends the Web application identifier to the AS, to cause the AS to determine the service authority of the UE based on the service authority policy corresponding to the Web application identifier and the subscription service data of the UE, thereby improving the accuracy of controlling the service authority of the UE in a scenario in which the UE accesses an IMS network from a Web application website.

Figure 9 is a schematic structural diagram of a fourth embodiment of an apparatus for determining a service authority according to the present invention. As shown in Figure 9, the apparatus includes: a receiving module 20 configured to receive a Web application identifier sent by a network device, and a determining module 21 configured to determine a service authority of a user equipment UE based on a service authority policy corresponding to the Web application identifier and service subscription data of the UE.

Optionally, the service authority policy corresponding to the above Web application identifier is pre-configured in the AS or is obtained by the AS from an HSS.

In the apparatus for determining the service authority according to the embodiment of the present invention, the receiving module receives the Web application identifier sent by the network device, and the determining module determines the service authority of the UE based on the service authority policy corresponding to the Web application identifier and the subscription service data of the UE, thereby improving the accuracy of controlling the service authority of the UE in a scenario in which the UE accesses an IMS network from a Web application website.

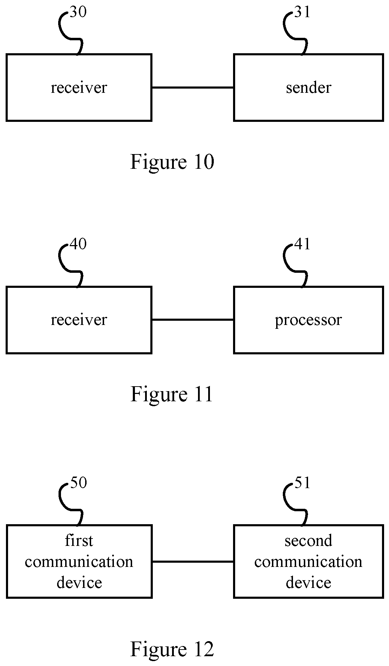

Figure 10 is a schematic structural diagram of a first embodiment of a device for determining a service authority according to the present invention. As shown in Figure 10, the device includes a receiver 30 and a sender 31. The receiver 30 is configured to receive a Web application identifier sent by an access device; and the sender 31 is configured to send the Web application identifier to an AS, to cause the AS to determine the service authority of a UE based on a service authority policy corresponding to the Web application identifier and service subscription data of the UE.

In the device for determining the service authority according to the embodiment of the present invention, the receiver receives the Web application identifier sent by the access device and the sender sends the Web application identifier to the AS, to cause the AS to determine the service authority of the UE based on the service authority policy corresponding to the Web application identifier and the subscription service data of the UE, thereby improving the accuracy of controlling the service authority of the UE in a scenario in which the UE accesses an IMS network from a Web application website.

Optionally, the above receiver 31 is configured to receive a SIP registration message sent by the above access device, where the SIP registration message carries the Web application identifier.

Optionally, the above receiver 31 is configured to receive an invite message sent by the access device, where the invite message carries the Web application identifier.

Optionally, the above receiver 31 is configured to receive a SIP registration message, which is sent by the access device after the Web application identifier sent by an operator WebRTC authentication system is received by the access device, and the Web application identifier is sent by the operator WebRTC authentication system after the operator WebRTC authentication system verifies that an access code received from the access device is valid.

Optionally, the above receiver 31 is configured to receive the invite message, which is sent by the access device after the Web application identifier sent by the operator WebRTC authentication system is received by the access device, and the Web application identifier is sent by the above operator WebRTC authentication system after the operator WebRTC authentication system verifies that the access code received from the access device is valid.

Optionally, the above receiver 31 is configured to receive an invite message, which is sent by the above access device after a session request message carrying the Web application identifier sent by the UE is received by the above access device.

Optionally, the service authority policy corresponding to the above Web application identifier is pre-configured in the AS, or is obtained by the AS from an HSS.

Optionally, the above operator WebRTC authentication system may also send a user identity identifier to the access device when sending the Web application identifier to the access device.

In the device for determining the service authority according to the embodiment of the present invention, the receiver receives the Web application identifier sent by the access device, and the sender sends the Web application identifier to the AS, to cause the AS to determine the service authority of the UE based on the service authority policy corresponding to the Web application identifier and the subscription service data of the UE, thereby improving the accuracy of controlling the service authority of the UE in a scenario in which the UE accesses an IMS network from a Web application website.

Figure 11 is a schematic structural diagram of a second embodiment of a device for determining a service authority according to the present invention. As shown in Figure 11, the device includes a receiver 40 and a processor 41. The receiver 40 is configured to receive a Web application identifier sent by a network device, and the processor 41 is configured to determine a service authority of a UE based on a service authority policy corresponding to the above Web application identifier and service subscription data of the UE.

Optionally, the service authority policy corresponding to the above Web application identifier is pre-configured in the processor 41 or is obtained by the processor 41 from an HSS.

In the device for determining the service authority according to the embodiment of the present invention, the receiver receives the Web application identifier sent by the network device, and the processor determines the service authority of the UE based on the service authority policy corresponding to the Web application identifier and the subscription service data of the UE, thereby improving the accuracy of controlling the service authority of the UE in a scenario in which the UE accesses an IMS network from a Web application website.

Figure 12 is a schematic structural diagram of a first embodiment of a system for determining a service authority according to the present invention. The system includes a first communication device 50 and a second communication device 51.

The first communication device 50 may include any one of the apparatuses for determining a service authority as shown in Figure 6 to Figure 8, or may include the device for determining a service authority as shown in Figure 10. Optionally, the above first communication device 50 may be an S-CSCF, an I-CSCF or a P-CSCF.

The second communication device 51 may include the apparatus for determining a service authority as shown in Figure 9, or may include the device for determining a service authority as shown in Figure 11. Optionally, the second communication device may be an AS.

In the system for determining the service authority according to the embodiment of the present invention, the first communication device receives the Web application identifier sent by the network device, and the second communication device determines the service authority of the UE based on the service authority policy corresponding to the Web application identifier and the subscription service data of the UE, thereby improving the accuracy of controlling the service authority of the UE in a scenario in which the UE accesses an IMS network from a Web application website.

Finally it should be noted that, the above embodiments are merely provided for describing the technical solutions of the present invention, but not intended to limit the present invention as defined in the attached claims.

## Claims

1. A method for determining a service accessibility of a user equipment, UE, in a case that the UE accesses an IP Multimedia Subsystem, IMS, network via a third-party web, Web, application, comprising:
receiving (S101) a Web application identifier of the third-party web application sent by an access device; and
sending (S102) the Web application identifier to an application server, AS, to cause the AS to determine the service accessibility of the UE based on a service accessibility policy corresponding to the Web application identifier and service subscription data of the UE.

2. The method according to claim 1, wherein receiving the Web application identifier sent by the access device comprises:
receiving (307, 407, 507) a session initiation protocol, SIP, registration message sent by the access device, wherein the SIP registration message carries the Web application identifier.

3. The method according to claim 1, wherein receiving the Web application identifier sent by the access device comprises:
receiving (411, 511) an invite message sent by the access device, wherein the invite message carries the Web application identifier.

4. The method according to claim 2, wherein receiving the session initiation protocol, SIP, registration message sent by the access device comprises:
receiving the SIP registration message, which is sent by the access device after the Web application identifier sent by an operator web real-time communication, WebRTC, authentication system is received by the access device, wherein the Web application identifier is sent by the operator WebRTC authentication system after the operator WebRTC authentication system verifies that an access code received from the access device is valid.

5. The method according to claim 3, wherein receiving the invite message sent by the access device comprises:
receiving the invite message, which is sent by the access device after the Web application identifier sent by an operator WebRTC authentication system is received by the access device, wherein the Web application identifier is sent by the operator WebRTC authentication system after the operator WebRTC authentication system verifies that an access code received from the access device is valid.

6. A method for determining a service accessibility of a user equipment, UE, in a case that the UE accesses an IP Multimedia Subsystem, IMS, network via a third-party web, Web, application, comprising:
receiving (S201), by an application server, AS, a Web application identifier of the third-party web application sent by a network device; and
determining (S202) the service accessibility of the UE based on a service accessibility policy corresponding to the Web application identifier and service subscription data of the UE.

7. The method according to claim 6, wherein the service accessibility policy corresponding to the Web application identifier is pre-configured in the AS, or is obtained by the AS from a home subscriber server, HSS.

8. An apparatus for determining a service accessibility of a user equipment, UE, in a case that the UE accesses an IP Multimedia Subsystem, IMS, network via a third-party web, Web, application, comprising:
a receiving module (10) configured to receive a Web application identifier of the third-party web application sent by an access device; and
a sending module (11) configured to send the Web application identifier to an application server, AS, to cause the AS to determine the service accessibility of the UE based on a service accessibility policy corresponding to the Web application identifier and service subscription data of the UE.

9. The apparatus according to claim 8, wherein the receiving module (10) comprises:
a first receiving unit (101) configured to receive a session initiation protocol, SIP, registration message sent by the access device, wherein the SIP registration message carries the Web application identifier.

10. The apparatus according to claim 8, wherein the receiving module (10) comprises:
a second receiving unit (102) configured to receive an invite message sent by the access device, wherein the invite message carries the Web application identifier.

11. The apparatus according to claim 9, wherein the first receiving unit (101) is configured to receive the SIP registration message, which is sent by the access device after the Web application identifier sent by an operator web real-time communication, WebRTC, authentication system is received by the access device, wherein the Web application identifier is sent by the operator WebRTC authentication system after the operator WebRTC authentication system verifies that an access code received from the access device is valid.

12. The apparatus according to claim 10, wherein the second receiving unit (102) is configured to receive the invite message, which is sent by the access device after the Web application identifier sent by an operator WebRTC authentication system is received by the access device, wherein the Web application identifier is sent by the operator WebRTC authentication system after the operator WebRTC authentication system verifies that an access code received from the access device is valid.

13. An apparatus for determining a service accessibility of a user equipment, UE, in a case that the UE accesses an IP Multimedia Subsystem, IMS, network via a third-party web, Web, application, comprising:
a receiving module (20) configured to receive a Web application identifier of the third-party web application sent by a network device; and
a determining module (21) configured to determine the service accessibility of the UE based on a service accessibility policy corresponding to the Web application identifier and service subscription data of the UE.

14. The apparatus according to claim 13, wherein the service accessibility policy corresponding to the Web application identifier is pre-configured in the AS, or is obtained by the AS from a home subscriber server, HSS.

## Patentansprüche

1. Verfahren zum Bestimmen einer Diensterreichbarkeit einer Teilnehmereinrichtung, UE, in einem Fall, in dem die UE via eine Drittanbieterweb(Web)-Anwendung auf ein IP-Multimediauntersystem(IMS)-Netzwerk zugreift, Folgendes umfassend:
Empfangen (S101) einer Webanwendungskennung der Drittanbieterwebanwendung, die von einer Zugangsvorrichtung gesendet wurde; und
Senden (S102) der Webanwendungskennung an einen Anwendungsserver, AS, um den AS zu veranlassen, die Diensterreichbarkeit der UE auf Basis einer Diensterreichbarkeitsrichtlinie, die der Webanwendungskennung entspricht, und von Dienstsubskriptionsdaten der UE zu bestimmen.

2. Verfahren nach Anspruch 1, wobei das Empfangen der Webanwendungskennung, die von der Zugangsvorrichtung gesendet wurde, Folgendes umfasst:
Empfangen (307, 407, 507) einer Sitzungsinitiierungsprotokoll(SIP)-Registrierungsnachricht, die von der Zugangsvorrichtung gesendet wurde, wobei die SIP-Registrierungsnachricht die Webanwendungskennung enthält.

3. Verfahren nach Anspruch 1, wobei das Empfangen der Webanwendungskennung, die von der Zugangsvorrichtung gesendet wurde, Folgendes umfasst:
Empfangen (411, 511) einer Einladungsnachricht, die von der Zugangsvorrichtung gesendet wurde, wobei die Einladungsnachricht die Webanwendungskennung enthält.

4. Verfahren nach Anspruch 2, wobei das Empfangen der Sitzungsinitiierungsprotokoll(SIP)-Registrierungsnachricht, die von der Zugangsvorrichtung gesendet wurde, Folgendes umfasst:
Empfangen der SIP-Registrierungsnachricht, die von der Zugangsvorrichtung gesendet wurde, nachdem die Webanwendungskennung, die von einem Betreiberechtzeitwebkommunikations(WebRTC)-Authentifizierungssystem gesendet wurde, von der Zugangsvorrichtung empfangen wurde, wobei die Webanwendungskennung vom Betreiber-WebRTC-Authentifizierungssystem gesendet wurde, nachdem das Betreiber-WebRTC-Authentifizierungssystem verifiziert hatte, dass ein Zugangscode, der von der Zugangsvorrichtung empfangen wurde, gültig ist.

5. Verfahren nach Anspruch 3, wobei das Empfangen der Einladungsnachricht, die von der Zugangsvorrichtung gesendet wurde, Folgendes umfasst:
Empfangen der Einladungsnachricht, die von der Zugangsvorrichtung gesendet wurde, nachdem die Webanwendungskennung, die von einem Betreiber-WebRTC-Authentifizierungssystem gesendet wurde, von der Zugangsvorrichtung empfangen wurde, wobei die Webanwendungskennung vom Betreiber-WebRTC-Authentifizierungssystem gesendet wurde, nachdem das Betreiber-WebRTC-Authentifizierungssystem verifiziert hatte, dass ein Zugangscode, der von der Zugangsvorrichtung empfangen wurde, gültig ist.

6. Verfahren zum Bestimmen einer Diensterreichbarkeit einer Teilnehmereinrichtung, UE, in einem Fall, in dem die UE via eine Drittanbieterweb(Web)-Anwendung auf ein IP-Multimediauntersystem(IMS)-Netzwerk zugreift, Folgendes umfassend:
Empfangen (S201) einer Webanwendungskennung der Drittanbieterwebanwendung, die von einer Netzwerkvorrichtung gesendet wurde, durch einen Anwendungsserver, AS; und
Bestimmen (S202) der Diensterreichbarkeit der UE auf Basis einer Diensterreichbarkeitsrichtlinie, die der Webanwendungskennung entspricht, und von Dienstsubskriptionsdaten der UE.

7. Verfahren nach Anspruch 6, wobei die Diensterreichbarkeitsrichtlinie, die der Webanwendungskennung entspricht, auf dem AS vorausgelegt ist oder vom AS von einem Heimteilnehmerserver, HSS, erhalten wird.

8. Einrichtung zum Bestimmen einer Diensterreichbarkeit einer Teilnehmereinrichtung, UE, in einem Fall, in dem die UE via eine Drittanbieterweb(Web)-Anwendung auf ein IP-Multimediauntersystem(IMS)-Netzwerk zugreift, Folgendes umfassend:
ein Empfangsmodul (10), das dazu ausgelegt ist, eine Webanwendungskennung der Drittanbieterwebanwendung, die von einer Zugangsvorrichtung gesendet wurde, zu empfangen; und
ein Sendemodul (11), das dazu ausgelegt ist, die Webanwendungskennung an einen Anwendungsserver, AS, zu senden, um den AS zu veranlassen, die Diensterreichbarkeit der UE auf Basis einer Diensterreichbarkeitsrichtlinie, die der Webanwendungskennung entspricht, und von Dienstsubskriptionsdaten der UE zu bestimmen.

9. Einrichtung nach Anspruch 8, wobei das Empfangsmodul (10) Folgendes umfasst:
eine erste Empfangseinheit (101), die dazu ausgelegt ist, eine Sitzungsinitiierungsprotokoll(SIP)-Registrierungsnachricht, die von der Zugangsvorrichtung gesendet wurde, zu empfangen, wobei die SIP-Registrierungsnachricht die Webanwendungskennung enthält.

10. Einrichtung nach Anspruch 8, wobei das Empfangsmodul (10) Folgendes umfasst:
eine zweite Empfangseinheit (102), die dazu ausgelegt ist, eine Einladungsnachricht, die von der Zugangsvorrichtung gesendet wurde, zu empfangen, wobei die Einladungsnachricht die Webanwendungskennung enthält.

11. Einrichtung nach Anspruch 9, wobei die erste Empfangseinheit (101) dazu ausgelegt ist, die SIP-Registrierungsnachricht zu empfangen, die von der Zugangsvorrichtung gesendet wurde, nachdem die Webanwendungskennung, die von einem Betreiberechtzeitwebkommunikations(WebRTC)-Authentifizierungssystem gesendet wurde, von der Zugangsvorrichtung empfangen wurde, wobei die Webanwendungskennung vom Betreiber-WebRTC-Authentifizierungssystem gesendet wurde, nachdem das Betreiber-WebRTC-Authentifizierungssystem verifiziert hatte, dass ein Zugangscode, der von der Zugangsvorrichtung empfangen wurde, gültig ist.

12. Einrichtung nach Anspruch 10, wobei die zweite Empfangseinheit (102) dazu ausgelegt ist, die Einladungsnachricht zu empfangen, die von der Zugangsvorrichtung gesendet wurde, nachdem die Webanwendungskennung, die von einem Betreiber-WebRTC-Authentifizierungssystem gesendet wurde, von der Zugangsvorrichtung empfangen wurde, wobei die Webanwendungskennung vom Betreiber-WebRTC-Authentifizierungssystem gesendet wurde, nachdem das Betreiber-WebRTC-Authentifizierungssystem verifiziert hatte, dass ein Zugangscode, der von der Zugangsvorrichtung empfangen wurde, gültig ist.

13. Einrichtung zum Bestimmen einer Diensterreichbarkeit einer Teilnehmereinrichtung, UE, in einem Fall, in dem die UE via eine Drittanbieterweb(Web)-Anwendung auf ein IP-Multimediauntersystem(IMS)-Netzwerk zugreift, Folgendes umfassend:
ein Empfangsmodul (20), das dazu ausgelegt ist, eine Webanwendungskennung der Drittanbieterwebanwendung, die von einer Netzwerkvorrichtung gesendet wurde, zu empfangen; und
ein Bestimmungsmodul (21), das dazu ausgelegt ist, die Diensterreichbarkeit der UE auf Basis einer Diensterreichbarkeitsrichtlinie, die der Webanwendungskennung entspricht, und von Dienstsubskriptionsdaten der UE zu bestimmen.

14. Einrichtung nach Anspruch 13, wobei die Diensterreichbarkeitsrichtlinie, die der Webanwendungskennung entspricht, auf dem AS vorausgelegt ist oder vom AS von einem Heimteilnehmerserver, HSS, erhalten wird.

## Revendications

1. Procédé pour déterminer une accessibilité de service d'un équipement utilisateur (UE) dans le cas où l'équipement utilisateur a accès à un réseau de sous-système multimédia IP (IMS) par le biais d'une application web (Web) de tiers, consistant :
à recevoir (S101) un identifiant d'application Web de l'application Web de tiers envoyé par un dispositif d'accès ; et
à envoyer (S102) l'identifiant d'application Web à un serveur d'application (AS) pour contraindre le serveur AS à déterminer l'accessibilité de service de l'équipement utilisateur en se basant sur une politique d'accessibilité de service correspondant à l'identifiant d'application Web et sur des données d'abonnement à un service de l'équipement utilisateur.

2. Procédé selon la revendication 1, dans lequel la réception de l'identifiant d'application Web envoyé par le dispositif d'accès consiste :
à recevoir (307, 407, 507) un message d'enregistrement de protocole d'initiation de protocole (SIP) envoyé par le dispositif d'accès, dans lequel le message d'enregistrement de protocole SIP comporte l'identifiant d'application Web.

3. Procédé selon la revendication 1, dans lequel la réception de l'identifiant d'application Web envoyé par le dispositif d'accès consiste :
à recevoir (411, 511) un message d'invite envoyé par le dispositif d'accès, dans lequel le message d'invite comporte l'identifiant d'application Web.

4. Procédé selon la revendication 2, dans lequel la réception du message d'enregistrement de protocole d'initiation de protocole (SIP) envoyé par le dispositif d'accès
consiste :
à recevoir le message d'enregistrement de protocole SIP, qui est envoyé par le dispositif d'accès après que l'identifiant d'application Web envoyé par un système d'authentification de communication en temps réel sur le Web (WebRTC) d'opérateur est reçu par le dispositif d'accès, dans lequel l'identifiant d'application Web est envoyé par le système d'authentification de communication WebRTC d'opérateur après que le système d'authentification de communication WebRTC d'opérateur vérifie qu'un code d'accès reçu du dispositif d'accès est valide.

5. Procédé selon la revendication 3, dans lequel la réception du message d'invite envoyé par le dispositif d'accès consiste :
à recevoir le message d'invite, qui est envoyé par le dispositif d'accès après que l'identifiant d'application Web envoyé par un système d'authentification de communication WebRTC d'opérateur est reçu par le dispositif d'accès, dans lequel l'identifiant d'application Web est envoyé par le système d'authentification de communication WebRTC d'opérateur après que le système d'authentification de communication WebRTC d'opérateur vérifie qu'un code d'accès reçu du dispositif d'accès est valide.

6. Procédé pour déterminer une accessibilité de service d'un équipement utilisateur (UE) dans le cas où l'équipement utilisateur a accès à un réseau de sous-système multimédia IP (IMS) par le biais d'une application web (Web) de tiers, consistant :
à recevoir (S201), au moyen d'un serveur d'application (AS), un identifiant d'application Web de l'application Web de tiers envoyé par un dispositif d'accès ; et
à déterminer (S202) l'accessibilité de service de l'équipement utilisateur en se basant sur une politique d'accessibilité de service correspondant à l'identifiant d'application Web et sur des données d'abonnement à un service de l'équipement utilisateur.

7. Procédé selon la revendication 6, dans lequel la politique d'accessibilité de service correspondant à l'identifiant d'application Web est préconfigurée dans le serveur AS ou est obtenue par le serveur AS à partir d'un serveur d'abonné domestique (HSS).

8. Appareil pour déterminer une accessibilité de service d'un équipement utilisateur (UE) dans le cas où l'équipement utilisateur a accès à un réseau de sous-système multimédia IP (IMS) par le biais d'une application web (Web) de tiers, comprenant :
un module de réception (10) configuré pour recevoir un identifiant d'application Web de l'application Web de tiers envoyé par un dispositif d'accès ; et
un module d'envoi (11) configuré pour envoyer l'identifiant d'application Web à un serveur d'application (AS) pour contraindre le serveur AS à déterminer l'accessibilité de service de l'équipement utilisateur en se basant sur une politique d'accessibilité de service correspondant à l'identifiant d'application Web et sur des données d'abonnement à un service de l'équipement utilisateur.

9. Appareil selon la revendication 8, dans lequel le module de réception (10) comprend :
une première unité de réception (101) configurée pour recevoir un message d'enregistrement de protocole d'initiation de protocole (SIP) envoyé par le dispositif d'accès, dans lequel le message d'enregistrement de protocole SIP comporte l'identifiant d'application Web.

10. Appareil selon la revendication 8, dans lequel le module de réception (10) comprend :
une seconde unité de réception (102) configurée pour recevoir un message d'invite envoyé par le dispositif d'accès, dans lequel le message d'invite comporte l'identifiant d'application Web.

11. Appareil selon la revendication 9, dans lequel la première unité de réception (101) est configurée pour recevoir le message d'enregistrement de protocole SIP, qui est envoyé par le dispositif d'accès après que l'identifiant d'application Web envoyé par un système d'authentification de communication en temps réel sur le Web (WebRTC) d'opérateur est reçu par le dispositif d'accès, dans lequel l'identifiant d'application Web est envoyé par le système d'authentification de communication WebRTC d'opérateur après que le système d'authentification de communication WebRTC d'opérateur vérifie qu'un code d'accès reçu du dispositif d'accès est valide.

12. Appareil selon la revendication 10, dans lequel la seconde unité de réception (102) est configurée pour recevoir le message d'invite, qui est envoyé par le dispositif d'accès après que l'identifiant d'application Web envoyé par un système d'authentification de communication WebRTC d'opérateur est reçu par le dispositif d'accès, dans lequel l'identifiant d'application Web est envoyé par le système d'authentification de communication WebRTC d'opérateur après que le système d'authentification de communication WebRTC d'opérateur vérifie qu'un code d'accès reçu du dispositif d'accès est valide.

13. Appareil pour déterminer une accessibilité de service d'un équipement utilisateur (UE) dans le cas où l'équipement utilisateur a accès à un réseau de sous-système multimédia IP (IMS) par le biais d'une application web (Web) de tiers, comprenant :
un module de réception (20) configuré pour recevoir un identifiant d'application Web de l'application Web de tiers envoyé par un dispositif d'accès ; et
un module de détermination (21) configuré pour déterminer l'accessibilité de service de l'équipement utilisateur en se basant sur une politique d'accessibilité de service correspondant à l'identifiant d'application Web et sur des données d'abonnement à un service de l'équipement utilisateur.

14. Appareil selon la revendication 13, dans lequel la politique d'accessibilité de service correspondant à l'identifiant d'application Web est préconfigurée dans le serveur AS ou est obtenue par le serveur AS à partir d'un serveur d'abonné domestique (HSS).
